# EUROPÄISCHE PATENTSCHRIFT

(11) **EP 1 087 879 B1**
(45) Veröffentlichungstag und Bekanntmachung des Hinweises auf die Patenterteilung: **07.05.2003**
(21) Anmeldenummer: 99931040.2
(22) Anmeldetag: 07.06.1999
(51) Int. Cl.: B60R 21/20

(54) **RÜCKHALTEEINRICHTUNG FÜR EIN EINE AIRBAGANORDNUNG ABDECKENDES VERKLEIDUNGSTEIL**
RESTRAINING DEVICE FOR A COVERING PART OF AN AIRBAG ARRANGEMENT
DISPOSITIF DE RETENUE POUR PANNEAU D'HABILLAGE D'AIRBAG

(30) Priorität: 24.06.1998 DE 19828163
(43) Veröffentlichungstag der Anmeldung: 04.04.2001
(73) Patentinhaber: Volkswagen Aktiengesellschaft, 38436 Wolfsburg (DE)
(72) Erfinder: PASCH, Marcus, D-38539 Müden (DE)
(74) Vertreter: Liebl, Thomas, Dipl.-Ing.
(86) Internationale Anmeldenummer: EP9903914
(87) Internationale Veröffentlichungsnummer: WO99067109

(56) Entgegenhaltungen:
- EP-A- 0 415 362
- EP-A- 0 873 916
- WO-A-98/19893
- DE-A- 4 315 853
- US-A- 5 403 034

## Beschreibung

Die Erfindung betrifft eine Rückhalteeinrichtung für ein eine Airbaganordnung abdeckendes Verkleidungsteil nach dem Oberbegriff des Anspruchs 1. Eine derartige Rückhalteeinrichtung ist aus der US-A-5 403 034 bekannt.

Es ist allgemein bekannt, Airbags in Kraftfahrzeugen hinter aufreißbaren oder aufklappbaren Abdeckungen anzuordnen. Die Abdeckungen können dabei als Verkleidungsteile ausgebildet sein, die sich bei der Entfaltung des Airbags insgesamt von einer die Airbaganordnung abdeckenden Innenverkleidung ablösen. Damit das sich ablösende Verkleidungsteil nicht unkontrolliert in den Fahrgastraum geschleudert wird, begrenzt ein am Verkleidungsteil befestigtes Fangband die Bewegung des Verkleidungsteils.

Um in einer Unfallsituation einen optimalen Insassenschutz zu erhalten, sind weiterhin auch Seitenairbags bekannt, die an der Innenverkleidung oberhalb der Seitenfenster innen an den Dachseitenrändem vorgesehen sein können. Dabei sind bekannte Innenverkleidungen so ausgebildet, dass diese sich beim Auslösen des Seitenairbags aufbiegen und eine Austrittsöffnung für den Seitenairbag freigeben. Die Verkleidungsteile sowie die darunter zusammengefaltet untergebrachten Airbags können an den seitlichen Säulen des Rohbaus eines Kraftfahrzeugs befestigt sein.

Aus der US-A-5 403 034 ist eine Rückhalteeinrichtung für ein eine Airbaganordnung abdeckendes Verkleidungsteil der Innenverkleidung eines Kraftfahrzeugs bekannt, bei dem sich das Verkleidungsteil bei der Entfaltung des Airbags aus der Rückhalteeinrichtung löst und dadurch eine freie Entfaltung des Airbags in einer Unfallsituation ermöglicht. Die Rückhalteeinrichtung weist ein als federelastische Klammer ausgebildetes Befestigungselement, die am Rohbau des Kraftfahrzeugs lösbar befestigt ist, und ein mit der federelastischen Klammer verbundenes Halteelement, das das Verkleidungsteil lösbar festhält, auf.

Konkret weist das Verkleidungsteil hier einen Vorsprung auf, an dessem freien Ende ein nutförmiger Kanal ausgebildet ist. In diesem Kanal ist ein entsprechend komplementär zum Kanal ausgebildetes verdicktes freies Ende des rippenartig ausgebildeten Halteelements in etwa formschlüssig aufgenommen. Das Halteelement ist wiederum in eine federelastische Klammer eingesetzt. Über diese federelastische Klammer ist der gesamte Aufbau in eine fahrzeugseitige Konsole lösbar einklipsbar. Im Falle einer Airbagaktivierung wird durch den sich aufblasenden Airbag eine Druckkraft und damit eine Abhebekraft auf das Verkleidungsteil ausgeübt, wodurch das Verkleidungsteil unter Aufweitung der Kanalwände von dem verdickten Ende des Halteelements abgezogen wird. Das Halteelement bleibt während dieses Abzugsvorgangs fest mit der elastischen Klammer verbunden, da hier entsprechende Federzungen in eine Öffnung am Halteelement eingreifen. Um das Halteelement mitsamt der elastischen Klammer auszutauschen, kann die federelastische Klammer zusammengedrückt werden.

Nachteilig bei einem derartigen Aufbau ist, dass hier die Gefahr besteht, dass das sich ablösende Verkleidungsteil unkontrolliert in den Fahrgastraum geschleudert wird, wodurch eine Gefährdung für die Fahrzeuginsassen entsteht. Weiterhin wird durch die Festlegung des verdickten Endes im Kanal eine insgesamt relativ schwer lösbare Verbindung geschaffen, die erst bei größeren Drücken durchrutscht, so dass mit einem solchen Aufbau der Aufblasvorgang gegebenenfalls in unerwünschter Weise behindert und verzögert werden kann, wodurch wiederum die Funktionssicherheit der Rückhalteeinrichtung beeinträchtigt werden kann.

Aus der DE 43 15 853 A1 ist ein Aufbau bekannt, bei dem ein Verkleidungsteil nur dann aufgesetzt werden kann, wenn ein ein Fangband festlegendes Rastelement ordnungsgemäß montiert ist. Dazu ist am Verkleidungsteil ein Fühler vorgesehen, dessen Einschub bei nicht in einen aufspreizbaren Körper eingeklipstem Rastelement blockiert wird. Das Fangband ist hier in herstellungstechnisch aufwendiger Weise integral mit dem Rastelement ausgebildet. Ein weiterer Aufbau mit einem Fangband ist aus der EP 0 415 362 A2 bekannt, bei der ein eine Airbagaustrittöffnung abdeckendes Verkleidungsteil, das in der Mitte zweigeteilt ist, über Abscherelemente am Fahrzeugaufbau festgelegt ist. Bei einer Entfaltung des Airbags im Falle eines Unfalls werden die Abscherelemente zwischen dem Verkleidungsteil und dem Fahrzeugaufbau abgeschert, so dass sich die einzelnen Verkleidungsteilklappen von der Airbagaustrittöffnung wegklappen lassen, wobei Fangbänder das unkontrollierte Wegschleudern der Verkleidungsteilklappen vermeiden sollen. Die Fangbänder sind hier jeweils aufwendig über Schraubverbindungen einerseits an einem Airbagkammergehäuse und andererseits an einem der beiden Verkleidungsteilklappen des Verkleidungsteils befestigt.

Aus der nachveröffentlichten EP 0 873 916 A1 ist weiter eine Rückhalteeinrichtung bekannt, bei der eine federelastische Klammer in ein Rohbauteil eingeklipst ist, wobei hier das Verkleidungsteil mittels eines Fangbands gesichert ist. Dieses Fangband ist mit einem Ende durch eine Ausnehmung an einem Schenkel der federelastischen Klammer geführt und anschließend zu einer Schlaufe gelegt. Zur Ausbildung der Schlaufe muss das freie Fangbandende hier in aufwendiger Weise mittels einer Schweiß- oder Nietverbindung am Fangband festgelegt werden.

Aufgabe der Erfindung ist es, eine alternative Rückhalteeinrichtung für ein eine Airbaganordnung abdeckendes Verkleidungsteil der Innenverkleidung eines Kraftfahrzeugs zu schaffen, mit der die Gefahr durch das sich ablösende Verkleidungsteil im Falle einer Airbagaktivierung für den Fahrzeuginsassen erheblich reduziert ist und die bei hoher Funktionssicherheit ferner auch einfach und preiswert aufgebaut sowie einfach zu montieren und demontieren ist.

Diese Aufgabe wird mit den Merkmalen des neuen Patentanspruchs 1 gelöst.

Gemäß Patentanspruch 1 ist ein die Bewegung des Verkleidungsteils begrenzendes Fangband vorgesehen, das einerseits am Verkleidungsteil angebracht ist und andererseits ein Loch aufweist, durch das die am Rohbau des Kraftfahrzeugs lösbar befestigte federelastische Klammer hindurchgreift, wobei das Fangband durch das Halteelement an der federelastischen Klammer gesichert ist.

Vorteilhaft wird mit einem derartigen Aufbau sichergestellt, dass keine Teile der Rückhalteeinrichtung bei einer Unfallsituation unkontrolliert in den Fahrgastraum geschleudert werden können, da diese durch das Fangband zurückgehalten werden. Mit einem derartigen Aufbau kann ferner eine besonders einfache Festlegung des Fangbands an der federelastischen Klammer erreicht werden, da dieses lediglich mit dem Loch auf die federelastische Klammer aufgesteckt zu werden braucht. Gegen ein Abheben ist das Fangband im montierten Zustand hier auf besonders einfache und sichere Weise durch das ohnehin mit der federelastischen Klammer verbundene Halteelement gesichert. Insgesamt können hier somit das Fangband sowie auch die anderen Bauteile auf besonders einfache Weise lediglich durch Einklipsen oder dergleichen miteinander verbunden und auch wieder zerstörungsfrei voneinander gelöst werden, ohne dass hierfür Verbindungen, wie z. B. Schraubverbindungen oder sogar unlösbare Verbindungen, wie z. B. Niet- und/oder Schweißverbindungen und/oder integrale Verbindungen in aufwendiger Weise hergestellt und/oder gelöst werden müssen. Das Verkleidungsteil kann somit bei Bedarf zusammen mit der an ihm befestigten Rückhalteeinrichtung bequem, schnell und einfach montiert sowie demontiert werden.

Besonders vorteilhaft ergibt sich mit einem derartigen Aufbau auch eine Teile- und Funktionsintegration dadurch, dass das Halteelement in einer Dreifachfunktion einerseits das Verkleidungsteil am Fahrzeugaufbau hält, andererseits das Fangband sichert und weiter auch eine Anbindung der federelastischen Klammer ermöglicht. Auch die federelastische Klammer dient hier in einer vorteilhaften Mehrfachfunktion einerseits zur Festlegung des Fangbands und andererseits zur Festlegung der Rückhalteeinrichtung am Rohbau.

Das mit der federelastischen Klammer befestigte Halteelement ist außerdem so an dem Verkleidungsteil befestigt, dass sich die Verbindung zwischen Halteelement und Verkleidungsteil beim Auslösen des Airbags löst. Das Lösen der Verbindung zwischen Halteelement und Verkleidungsteil kann vorzugsweise dadurch erfolgen, dass am Verkleidungsteil angreifende Haltelaschen durch den beim Auslösen des Airbags auf das Verkleidungsteil wirkenden Druck aufgebogen werden und somit das Verkleidungsteil freigeben. Dabei wird sichergestellt, dass auch keine Teile der Rückhalteeinrichtung in einer Unfallsituation unkontrolliert in den Fahrgastraum geschleudert werden.

Das Halteelement hat vorzugsweise eine formstabile Halteplatte, mit der das am Verkleidungsteil angebrachte Fangband an der federelastischen Klammer gesichert wird. Zur Befestigung des Fangbandes an der federelastischen Klammer genügt dann ein im Fangband ausgebildetes Loch, durch das die federelastische Klammer hindurchgreift. Die am Halteelement ausgebildete Halteplatte kann außerdem eine Anlagefläche für das Verkleidungsteil bilden, an der sich das Verkleidungsteil in der Befestigungsposition abstützt.

Die Rückhalteeinrichtung ist bevorzugt so ausgebildet, dass das Halteelement am oberen Ende des in ein am Rohbau oder dergleichen vorgesehenes Befestigungsloch einsteckbaren Befestigungselements angebracht ist. Das Halteelement und die federelastische Klammer lassen sich einfach und kostengünstig aus jeweils einem Blechzuschnitt formen, wobei die geformten Blechteile sich dann ohne zusätzliche Verbindungsmittel verbinden lassen.

Das aus einem einstückigen Formteil aus Stahlblech gefertigte Halteelement ist vorzugsweise als eine bügelförmige Halteplatte mit seitlichen Haltelaschen und mit im Abstand oberhalb von und parallel zu den Haltelaschen seitlich abstehenden Haltelaschen ausgebildet, wobei die Haltelaschen am Verkleidungsteil lösbar angreifen. Die derart ausgebildete Rückhalteeinrichtung fixiert das Verkleidungsteil in der gewünschten Befestigungsposition am Rohbau eines Kraftfahrzeugs und lässt in der Unfallsituation ein Ablösen des Verkleidungsteils vom Halteelement zu, und zwar vorzugsweise dadurch, dass die Haltelaschen beim Auslösen des Airbags aufgebogen werden.

Die bevorzugte Ausführung sieht außerdem vor, dass die federelastische Klammer eine einstückige, aus Federstahl gebogene Klammer ist, die einen elastisch zusammendrückbaren, in ein Befestigungsloch am Rohbau eingreifenden Befestigungsbereich hat. Die als federelastische Klammer ausgebildete Befestigungseinrichtung lässt sich ganz einfach in ein Befestigungsloch einführen, bis der Befestigungsbereich der Befestigungseinrichtung federelastisch am Lochrand des Befestigungslochs einrastet.

Die Verbindung zwischen Halteelement und der federelastischen Klammer kann dadurch erfolgen, dass an der federelastischen Klammer zueinander waagrecht abgewinkelte Endabschnitte ausgebildet sind, die das Halteelement übergreifen.

Die Rückhalteeinrichtung ist insbesondere zur Befestigung von Verkleidungsteilen vorgesehen, die Seitenairbags abdecken und sich beim Entfalten eines Seitenairbags aus ihrer Verankerung lösen. Die Rückhalteeinrichtung kann aber auch an anderen Stellen der Innenverkleidung zur Befestigung von Airbagabdeckungen verwendet werden.

Die Erfindung wird anhand eines in der Zeichnung dargestellten Ausführungsbeispiels näher erläutert.

Es zeigen:
- Fig. 1: eine am Rohbau eines Kraftfahrzeugs befestigte Rückhalteeinrichtung mit einem Verkleidungsteil,
- Fig. 2: die Rückhalteeinrichtung von Fig. 1, bei der sich das Verkleidungsteil in einer Unfallsituation abgelöst hat,
- Fig. 3: den Zuschnitt aus Federstahl zur Formung einer federelastischen Klammer, die das Befestigungsteil der Rückhalteeinrichtung von Fig. 1 bildet,
- Fig. 4 und Fig. 5: zwei um 90° gedrehte Ansichten einer aus dem Zuschnitt von Fig. 3 geformten federelastischen Klammer,
- Fig. 6: einen Zuschnitt aus Stahlblech für die Halteeinrichtung der in Fig. 1 dargestellten Rückhalteeinrichtung,
- Fig. 7: die Draufsicht des aus dem Zuschnitt von Fig. 6 geformten Halteelements, und
- Fig. 8: die Seitenansicht des Halteelements von Fig. 7.

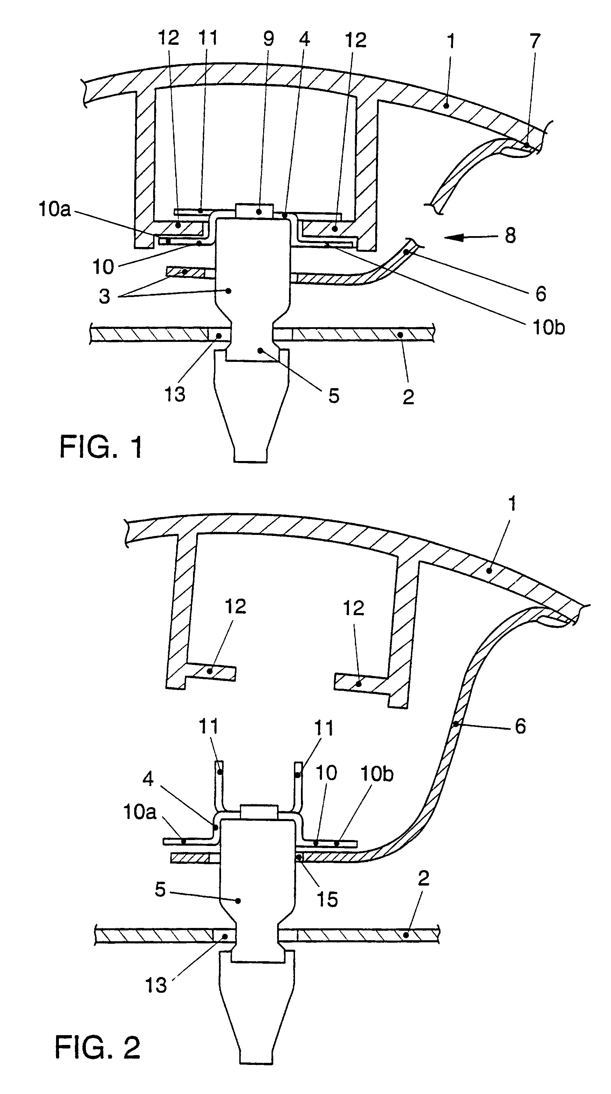

In Figur 1 ist ein Teilbereich eines Verkleidungsteils 1 und ein Abschnitt einer Säule 2 des Rohbaus eines Kraftfahrzeugs im Querschnitt dargestellt. Das Verkleidungsteil ist mittels einer Rückhalteeinrichtung 3 an der Säule 2 lösbar befestigt.

Die Rückhalteeinrichtung 3 besteht aus einem Halteelement 4, einer federelastischen Klammer 5 und einem an der federelastischen Klammer 5 befestigtem Fangband 6. Das Fangband 6 ist andererseits mit dem Verkleidungsteil 1 durch einen Schweißpunkt 7 verbunden. Die am Fangband 6 eingezeichnete Unterbrechung 8 deutet eine hier vorgesehene Schlaufe an, die so bemessen ist, dass beim Ablösen des Verkleidungsteils 1, wie dies in Figur 2 dargestellt ist, für das Verkleidungsteil 1 eine ausreichende Bewegungsfreiheit besteht.

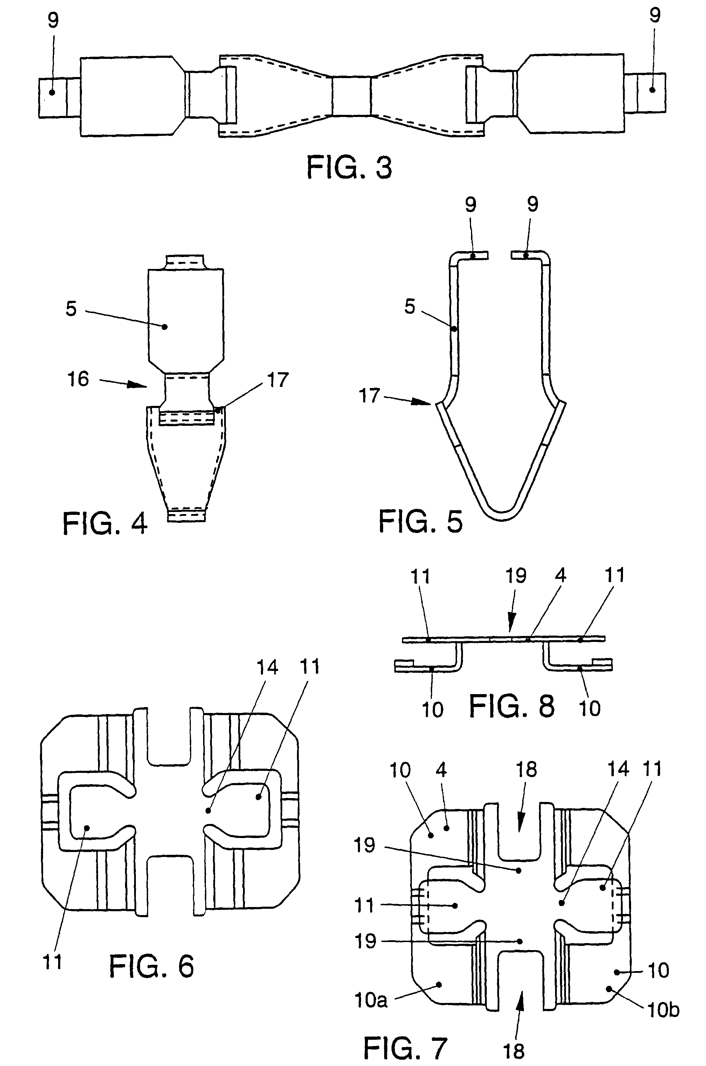

Das Halteelement 4, welches in den Figuren 6 bis 8 detaillierter dargestellt ist, wird von dem als federelastische Klammer 5 ausgebildeten Befestigungselement übergriffen. Die federelastische Klammer 5 besitzt zu diesem Zweck an seinem oberen Ende waagrecht abgewinkelte Endabschnitte 9, deren Ausbildung insbesondere in Figur 5 ersichtlich ist.

Das Halteelement 4 ist ein einstückiges Formteil aus Stahlblech, welches eine bügelförmige Halteplatte 10 mit seitlichen Haltelaschen 10a, 10b und parallel im Abstand dazu angeordnete Haltelaschen 11 hat. Das Verkleidungsteil 1 greift mit Befestigungsstegen 12 in den Zwischenraum zwischen den Haltelaschen 11 und den Rückhaltestegen 10a, 10b ein. Die federelastische Klammer 5 rastet federelastisch in ein Befestigungsloch 13 der Säule 2 ein, so dass dadurch das Verkleidungsteil 1 an der Säule 2 fixiert ist.

Die Haltelaschen 11 sind so bemessen, dass sich diese beim Auslösen eines unter dem Verkleidungsteil 1 befindlichen Airbags aufbiegen können, wie dies in Figur 2 dargestellt ist. Die Haltelaschen 11 können zu diesem Zweck entsprechend dünnwandig ausgebildet und/oder über einen entsprechend schmal ausgebildeten Verbindungssteg mit der bügelförmigen Halteplatte 10 verbunden sein. Bei dem in Figur 6 dargestellten Zuschnitt ist ein solch schmaler Verbindungssteg 14 an jedem der beiden Haltelaschen 11 ersichtlich.

Figur 2 zeigt weiterhin, dass das Fangband 6 von der Halteplatte 10 des Halteelements 4 an der federelastischen Klammer 5 gesichert wird. Die federelastische Klammer 5 greift durch ein am Fangband 6 ausgebildetes Loch 15.

Der in Figur 3 dargestellte Zuschnitt für das als federelastische Klammer 5 ausgebildete Befestigungselement zeigt die Schnitt- und Biegelinien. An den beiden Enden befinden sich die Endabschnitte 9, die bei der entsprechend Figur 4 und Figur 5 geformten federelastischen Klammer 5 zueinander abgewinkelt sind. Die federelastische Klammer 5 hat außerdem im mittleren Bereich eine Verjüngung, die einen Befestigungsbereich 16 bildet. Ist die federelastische Klammer 5, wie in Figur 2 dargestellt, in ein Befestigungsloch 13 eingesetzt, so greifen seitlich abstehende Befestigungsränder 17 unter den Öffnungsrand des Befestigungslochs 13. Durch Zusammendrücken des klammerförmigen Befestigungselements 5 lässt sich dieses wieder aus dem Befestigungsloch 13 herausziehen.

Mit dem in Figur 6 dargestellten Zuschnitt aus Stahlblech lässt sich das Halteelement 4 formen, welches in Figur 7 und Figur 8 gezeigt ist. Die federelastische Klammer 5 von Figur 5 wird in der Weise am Halteelement 4 befestigt, dass die Endabschnitte 9 (Figur 5) von den beiden seitlichen Aussparungen 18 an den Randbereichen 19 das Halteelement 4 übergreifen.

## Patentansprüche

1. Rückhalteeinrichtung für ein eine Airbaganordnung abdeckendes Verkleidungsteil (1) der Innenverkleidung eines Kraftfahrzeugs, bei dem sich das Verkleidungsteil (1) bei der Entfaltung des Airbags aus der Rückhalteeinrichtung (3) löst und dadurch eine freie Entfaltung des Airbags in einer Unfallsituation ermöglicht, wobei die Rückhalteeinrichtung (3) ein als federelastische Klammer (5) ausgebildetes Befestigungselement, die am Rohbau des Kraftfahrzeugs lösbar befestigt ist, und ein mit der federelastischen Klammer (5) verbundenes Halteelement (4), das das Verkleidungsteil (1) lösbar festhält, aufweist, sowie ein die Bewegung des Verkleidungsteils (1) begrenzendes Fangband (6) vorgesehen ist, das einerseits am Verkleidungsteil (1) angebracht ist, **dadurch gekennzeichnet, daß** das Fangband (6) andererseits ein Loch (15) aufweist, durch das die am Rohbau des Kraftfahrzeugs lösbar befestigte federelastische Klammer (5) hindurchgreift, wobei das Fangband (6) durch das Halteelement (4) an der federelastischen Klammer (5) gesichert ist.

2. Rückhalteeinrichtung nach Anspruch 1, **dadurch gekennzeichnet, daß** das Halteelement (4) mit verformbaren Haltelaschen (11) am Verkleidungsteil (1) angreift.

3. Rückhalteeinrichtung nach einem der Ansprüche 1 oder 2, **dadurch gekennzeichnet, daß** das Halteelement (4) eine formstabile Halteplatte (10) hat, die das Fangband (6) an der federelastischen Klammer (5) sichert.

4. Rückhalteeinrichtung nach einem der vorhergehenden Ansprüche, **dadurch gekennzeichnet, daß** das Halteelement (4) am oberen Ende der in ein am Rohbau oder dergleichen vorgesehenes Befestigungsloch (13) einsteckbaren federelastischen Klammer (5) angebracht ist.

5. Rückhalteeinrichtung nach einem der vorhergehenden Ansprüche, **dadurch gekennzeichnet, daß** das Halteelement (4) ein einstückiges Formteil aus Stahlblech ist, das als eine bügelförmige Halteplatte (10) mit seitlichen Rückhaltestegen (10a, 10b) und im Abstand mit oberhalb von und parallel zu den Rückhaltestegen (10a, 10b) seitlich abstehenden Haltelaschen (11) die am Verkleidungsteil (1) angreifen, ausgebildet ist.

6. Rückhalteeinrichtung nach einem der vorhergehenden Ansprüche, **dadurch gekennzeichnet, daß** die federelastische Klammer (5) eine einstückige, aus Federstahl gebogene Klammer ist, die einen elastisch zusammendrückbaren, in ein Befestigungsloch (13) am Rohbau eingreifenden Befestigungsbereich (16) hat.

7. Rückhalteeinrichtung nach Anspruch 6, **dadurch gekennzeichnet, daß** die Klammer das Halteelement (4) mit zueinander ausgerichteten, abgewinkelten Endabschnitten (9) übergreift.

8. Rückhalteeinrichtung nach Anspruch 7, **dadurch gekennzeichnet, daß** ein mittels der Rückhalteeinrichtung (3) am Rohbau eines Kraftfahrzeugs befestigtes Verkleidungsteil (1) zerstörungsfrei durch Zusammendrücken der Klammer demontierbar ist.

9. Rückhalteeinrichtung nach einem der vorhergehenden Ansprüche, **dadurch gekennzeichnet, daß** mit der Rückhalteeinrichtung (3) eine Säulenverkleidung im Bereich eines Seitenairbags am Rohbau eines Kraftfahrzeugs befestigt ist.

## Claims

1. Retaining device for a panelling part (1), which covers an airbag arrangement, of the interior panelling of a motor vehicle, in which, during the deployment of the airbag, the panelling part (1) becomes detached from the retaining device (3) and thereby makes it possible for the airbag to be freely deployed in an accident situation, the retaining device (3) having a fastening element designed as a resilient clip (5) which is fastened detachably to the body shell of the motor vehicle, and a holding element (4) which is connected to the resilient clip (5) and detachably secures the panelling part (1), and a catch strap (6) being provided, the strap limiting the movement of the panelling part (1) and being attached at one end to the panelling part (1), **characterized in that** the catch strap (6) has, at the other end, a hole (15) through which the resilient clip (5), which is fastened detachably to the body shell of the motor vehicle, reaches, the catch strap (6) being secured on the resilient clip (5) by the holding element (4).

2. Retaining device according to Claim 1, **characterized in that** the holding element (4) engages on the panelling part (1) with deformable holding tabs (11).

3. Retaining device according to either of Claims 1 and 2, **characterized in that** the holding element (4) has a dimensionally stable holding plate (10) which secures the catch strap (6) on the resilient clip (5).

4. Retaining device according to one of the preceding claims, **characterized in that** the holding element (4) is attached at the upper end of the resilient clip (5) which can be inserted into a fastening hole (13) provided on the body shell or the like.

5. Retaining device according to one of the preceding claims, **characterized in that** the holding element (4) is an integral shaped part made of sheet steel which is designed as a U-shaped holding plate (10) having lateral retaining webs (10a, 10b) and at a distance having holding tabs (11) which protrude laterally above and parallel to the retaining webs (10a, 10b) and engage on the panelling part (1).

6. Retaining device according to one of the preceding claims, **characterized in that** the resilient clip (5) is an integral clip which is bent from spring steel and has elastically compressible fastening region (16) which engages in a fastening hole (13) on the body shell.

7. Retaining device according to Claim 6, **characterized in that** the clip engages, with mutually aligned, bent end sections (9), over the holding element (4).

8. Retaining device according to Claim 7, **characterized in that** a panelling part (1) fastened to the body shell of a motor vehicle by means of the retaining device (3) can be removed without being destroyed, by compressing the clip.

9. Retaining device according to one of the preceding claims, **characterized in that** the retaining device (3) is used to fasten a pillar panelling to the body shell of a motor vehicle in the region of a side airbag.

## Revendications

1. Dispositif de retenue pour un élément d'habillage (1) de l'habillage intérieur d'un véhicule automobile, recouvrant un agencement d'airbag, dans lequel l'élément d'habillage (1) se détache du dispositif de retenue (3) lors du déploiement de l'airbag et permet ainsi un libre déploiement de l'airbag en cas d'accident, le dispositif de retenue (3) présentant un élément de fixation réalisé sous la forme d'une pince élastique à ressort (5), qui est fixée de manière détachable à la structure de la carrosserie du véhicule automobile, et un élément de retenue (4) relié à la pince élastique à ressort (5), qui fixe de manière détachable l'élément d'habillage (1), ainsi qu'une bande de garde (6) limitant le mouvement de l'élément d'habillage (1), qui est montée d'un côté sur l'élément d'habillage (1), **caractérisé en ce que** la bande de garde (6) présente de l'autre côté un trou (15) à travers lequel vient en prise la pince élastique à ressort (5) fixée de manière détachable sur la structure de la carrosserie du véhicule automobile, la bande de garde (6) étant fixée par l'élément de retenue (4) contre la pince élastique à ressort (5).

2. Dispositif de retenue selon la revendication 1, **caractérisé en ce que** l'élément de retenue (4) vient en prise avec des pattes de retenue déformables (11) sur l'élément d'habillage (1).

3. Dispositif de retenue selon l'une quelconque des revendications 1 ou 2, **caractérisé en ce que** l'élément de retenue (4) a une plaque de retenue de forme stable (10) qui fixe la bande de garde (6) sur la pince élastique à ressort (5).

4. Dispositif de retenue selon l'une quelconque des revendications précédentes, **caractérisé en ce que** l'élément de retenue (4) est monté à l'extrémité supérieure de la pince élastique à ressort (5) pouvant être enfoncée dans un trou de fixation (13) prévu sur la structure de la carrosserie ou similaire.

5. Dispositif de retenue selon l'une quelconque des revendications précédentes, **caractérisé en ce que** l'élément de retenue (4) est une pièce venue de moulage en tôle d'acier, qui est réalisée sous la forme d'une plaque de retenue en forme d'arceau (10) avec des ailettes de retenue latérales (10a, 10b) et, à distance de celles-ci, avec des pattes de retenue (11) saillant latéralement au-dessus de et parallèlement aux ailettes de retenue (10a, 10b), qui viennent en prise sur l'élément d'habillage (1).

6. Dispositif de retenue selon l'une quelconque des revendications précédentes, **caractérisé en ce que** la pince élastique à ressort (5) est une pince cintrée, formée d'une pièce, en acier à ressort, qui a une partie de fixation (16) comprimable élastiquement, venant en prise dans un trou de fixation (13) sur la structure de la carrosserie.

7. Dispositif de retenue selon la revendication 6, **caractérisé en ce que** la pince vient en prise par le dessus avec l'élément de retenue (4) au moyen de portions d'extrémité (9) coudées, orientées l'une vers l'autre.

8. Dispositif de retenue selon la revendication 7, **caractérisé en ce qu**'un élément d'habillage (1) fixé au moyen du dispositif de retenue (3) sur la structure de la carrosserie d'un véhicule automobile peut être démonté sans destruction par compression de la pince.

9. Dispositif de retenue selon l'une quelconque des revendications précédentes, **caractérisé en ce qu**'avec le dispositif de retenue (3), un habillage de colonne est fixé dans la région d'un airbag latéral sur la structure de la carrosserie d'un véhicule automobile.
